# EUROPEAN PATENT APPLICATION

(11) **EP 1 810 641 A1**
(43) Date of publication of application: **25.07.2007**
(21) Application number: 05786117.1
(22) Date of filing: 28.07.2005
(51) Int. Cl.: A61C 8/00

(54) **DYNAMIC PIER FOR CORRECTING INCORRECTLY-POSITIONED IMPLANTS AND CORRESPONDING TOOL**

(30) Priority: 30.07.2004 ES 200401885; 20.10.2004 ES 200402495; 23.03.2005 ES 200500682
(71) Applicant: Xam-Mar Mangrane, Esteban, 25002 Lleida (ES)
(72) Inventor: Xam-Mar Mangrane, Esteban, 25002 Lleida (ES)
(74) Representative: Aragones Forner, Rafael Angel
(86) International application number: PCT/ES2005/000432
(87) International publication number: WO 2006/024680

(57) **Abstract**

The invention relates to a dynamic pier which is used to modify and rectify angulations in the construction of structures on incorrectly-positioned implants. The invention comprises two independent parts forming of a link. According to the invention, the base has a semi-spherical configuration, while the end of the shaft that is coupled to the base has a complementary configuration. The above-mentioned link enables the shaft to form an angle of between 0 and 25° with the base. In addition, a screw is used to connect the base to the longitudinal auger of the implant which is introduced into the bone. Once cast, the aforementioned parts, base and shaft, form a single piece with the desired angulation, such that the prosthesis occupies the correct position regardless of the incorrect angular positioning of the implant in the bone. The inventive tool is equipped with a spherical actuation head.

## Description

### OBJECT OF THE INVENTION

A dynamic pillar for modifying and rectifying angulations in the construction of structures on incorrectly positioned implants and a fitting tool, and a static and straight pillar.

### FIELD OF THE INVENTION

The present invention relates to the manufacture of prostheses on dental implants in odontology in general, and to a fitting/removal tool.

The present invention has as its object a dynamic pillar for modifying and rectifying angulations in the construction of structures on incorrectly positioned implants.

The invention also has as its object a tool for fitting/removing the dynamic pillar to/from an implant being introduced in the bone.

The invention comprises another object consisting in a static and straight pillar being like the conventional ones but more economical.

### BACKGROUND OF THE INVENTION

There are so far in the market only static attachments for constructing structures on implants, and these attachments can be:
- made of plastics material, fully calcinable and each made as a one-piece member, and they are straight; or else
- combination attachments consisting in a machined gold base with calcinable chimney, these latter attachments also being straight and allowing to incline the chimney some 10° by disengaging it from the machined base.

These attachments are needed in order to make the metallic structure to be later on coated with aesthetic material. The ones being made of plastics material can in their turn be cast with any metal, i.e. both with noble and with not-noble metal. The combination attachments can only be cast with noble metal since their machined base is made of said metal.

When placing the implants in the first surgery it so happens that many times they cannot be placed in their correct position, this possibly happening because of many reasons, and thus it can be that the odontologist has not placed it correctly, or that when opening the gum the implant sometimes cannot be placed where planned because the bone does not meet a number of requirements, the implant hence having to be placed in an inclined position.

In these cases where the implant has been misplaced and it is desired to rectify the angulation there exist two options: to screw down a prefabricated titanium abutment with a given angulation of 15°, 17°, 25° or 30° and to then place the cemented prosthesis on these attachments, or else to place an attachment of the type of those having been mentioned above and modify it, said modification being carried out by waxing and cutting the plastics material, that abutment being thus shaped with the needed angulation, the prosthesis being then cemented on it.

The aforementioned drawbacks being related to the misplacement of the implants either because of a mistake having been made by the practitioner or because of being mandated by the bone's condition can be corrected up to a given point, i.e. by approximately 10°, but this implies a number of complex operations that do not give a perfect result and fetch a relatively high cost for the patient.

### SUMMARY OF THE INVENTION

The dynamic pillar being the object of the present invention obviates the aforementioned drawbacks and allows to perfectly rectify the misplacements and correct any inclination of the implant by means of the angulation in the piece being the object of the dynamic pillar of the present invention.

The present invention has as its object a dynamic pillar introducing a new concept since as stated by its very name it is endowed with motion, does away with the static notion of the pieces having been conceived so far and has a full freedom of motion between 0° and 25° all around the circumference, and hence it becomes an indispensable tool for resolving any type of angulation going from the smallest one up to 25°.

The dynamic pillar of the invention consists of two pieces being connected to each other with an elbow serving as an articulated link, and by pivoting the chimney on the half-sphere of the base said chimney can be placed at a maximum angulation of 25°, and when the chimney is at a maximum angulation one of the edges is in abutment with the base and prevents the angulation from being taken any further.

The dynamic pillar being the object of the present invention is essentially characterised in that it comprises two separate pieces making up the base and the chimney being connected to each other by means of an articulated link, of said two pieces the base having a half-sphere configuration and the chimney having a matching configuration at the end to be fitted to the base, said articulated link allowing the chimney to form an angle of up to some 25° with the base, this latter being adapted to be fitted by means of a screw to the longitudinal bore of the implant being introduced in the bone, said pieces namely being the base and the chimney once having been cast forming a one-piece member with the desired angulation, this allowing the prosthesis to be in the correct position thereby making up for any angularly incorrect placement of the implant in the bone.

According to the invention the combination of said pieces namely being the articulated base and chimney provides a freedom of motion between 0° and 25° and thus allows to relatively position them with respect to each other with the desired angulation before proceeding to carry out the casting operation.

The dynamic pillar of the invention allows to freely choose the metal to be cast, in such a way that the two calcinable pieces are cast with any metal, the machined base in noble metal and chimney of plastics material are cast with noble metal, and when the machined base is of TiLite with titanium this latter metal will be the one to be used for carrying out the casting operation, said TiLite with titanium being the only overcastable not-noble metal.

The dynamic pillar is applicable to any outer end of any implant existing in the market.

The base being in its turn made of the TiLite with titanium alloy, to which the chimney is overcast with the same TiLite with titanium alloy with the desired angulation, has in each case a matching configuration at its side to be fitted to the end of the implant, said matching configuration allowing to properly fit said base to any implant existing in the market.

Another object of the invention consists in the tool for fitting/removing the dynamic pillar of the present invention to/from the implant being introduced in the bone, said tool having a protrusion being made as a by way of nut head being fit to act as an actuator tip being adapted to actuate the screw being used for fitting the dynamic pillar to the implant by means of the matching recess being provided in the head of the screw, said protrusion having an essentially spherical configuration being defined by a succession of faces being made up by surfaces having the shape of spherical lunes and being truncated at both ends and delimited between each other by respective curved edges, said spherical protrusion being formed by a succession of spherical lunes being adapted to properly fit into the nut-shaped recess being innerly provided in the screw head and thus allowing the tool to perfectly carry out its actuating action at any angle being formed by the chimney and the base of the dynamic pillar, in said protrusion the aforementioned truncations at the actuator end defining and end plane and at the opposite end defining a circumference being the starting point for the elongated body making up a conventional actuator handle being made up by a cylindrical body comprising several lengths of different diameter for the manual actuation and having at the free end conventional fitting means for the actuation with power driving means.

A yet additional object of the present invention consists in a static and straight pillar or attachment being of the conventional type and fetching a lower price and hence being more within the reach of any citizen as compared with the conventional ones, since as for the metal to be overcast for the chimney being made of calcinable plastics material on the machined base being made of metal both metals do not have to be noble ones, which would notably increase the price of the pillar or attachment in question. The static and straight pillar or attachment having been mentioned above fetches a price that is within the reach of the general public.

According to what has been set forth above the invention consists in a pillar or attachment that is static and straight and comprises two separate pieces being axially fitted to each other, one of them being the machined base being made of TiLite with titanium whereas the other one is the calcinable chimney being overcastable with TiLite with titanium on the machined base, both pieces thus forming a straight one-piece member being only made of TiLite with titanium.

According to the invention the base of the pillar or attachment has a configuration matching that of the outer end of the implant and thus allowing to fittingly join said base and hence the pillar or attachment to any implant.

### DESCRIPTION OF THE DRAWINGS

These and other characterising features will be best made apparent by the following detailed description whose understanding will be made easier by the accompanying eight sheets of drawings showing a practical embodiment being cited only by way of example not limiting the scope of the present invention.

In the drawings:
Fig. 1 is an elevational view of the prior art when the attachment being made up by the base and the chimney is made of plastics material and the piece is straight.
Fig. 2 is an elevational view of the prior art when the attachment is made up by a combination and is a straight one, although it allows to carry out a small angulation.
Fig. 3 is an elevational view of the prior art with an attachment having a machined base.
Fig. 4 is an elevational view of the prior art wherein the implant has been misplaced and the chimney projects from the piece.
Fig. 5 is an elevational view of the prior art showing the cutting of the chimney and the waxing.
Fig. 6 is an elevational view of the prior art using a prefabricated titanium abutment and a cemented piece.
Fig. 7 corresponds to the dynamic pillar being the object of the present invention and shows the base and the chimney being arranged in a separate arrangement.
Fig. 8 is a view corresponding to Fig. 7 wherein the chimney has been fitted to the base by means of the aforementioned articulated link allowing an angulation from 0° up to 25°.
Fig. 9A is a longitudinally sectional view of a first preferred embodiment of the base of the dynamic pillar.
Fig. 9B is a plan-view from below of Fig. 9A.
Fig. 9C is a perspective view of the base of Figs. 9A and 9B.
Fig. 10A is a longitudinally sectional view of a second preferred embodiment of the base.
Fig. 10B is a perspective view from the side of Fig. 10A.
Fig. 10C is a perspective view from above of Fig. 10A.
Fig. 11A is a perspective view of the chimney of the dynamic pillar being the object of the present invention.
Fig. 11B is a longitudinally sectional view of the chimney of Fig. 11A.
Fig. 12A is a longitudinally sectional view of the dynamic pillar being the object of the present invention and comprising the second embodiment of the base and the chimney being fitted to each other and forming an angulation.
Fig. 12B is an elevational view corresponding to Fig. 12A.
Fig. 13A is a longitudinally sectional view of the dynamic pillar of the invention with the first embodiment of the base and the chimney being fitted to each other and forming an angulation.
Fig. 13B is an elevational view corresponding to Fig. 13A.
Fig. 14A is a perspective view of a first embodiment of the screw being used for fitting the dynamic pillar to the implant being positioned in the bone, as per the second embodiment of the dynamic pillar being shown in Figs. 12A and 12B.
Fig. 14B is a longitudinally sectional view of the screw being illustrated in Fig. 14A.
Fig. 14C is a plan-view of the screw being illustrated in Figs. 14A and 14B.
Fig. 15A is a perspective view of a second embodiment of the screw being used for fitting the dynamic pillar to the implant, as per the first embodiment of the dynamic pillar being illustrated in Figs. 13A and 13B.
Fig. 15B is a longitudinally sectional view of the screw of Fig. 15A.
Fig. 15C is a plan-view of the screw being illustrated in Figs. 15A and 15B.
Fig. 16 is an elevational view of the tool being an object of the invention.
Fig. 17 is a perspective view of the tool of the invention.
Fig. 18 is a fragmentary, elevational view of the tool in greater detail showing the spherical actuator protrusion.
Fig. 19 is a plan-view of the tool as seen from below showing another detail of the protrusion.
Fig. 20 is an elevational view showing only the tool and the screw.
Fig. 21 is a fragmentary view having been drawn at a larger scale and showing the screw and the actuator protrusion being illustrated in Fig. 20.
Fig. 22 is a fragmentary view having been drawn at a larger scale and showing the dynamic pillar whose base and chimney are forming a one-piece member, the screw and the tool in actuating position for the fitting/removal operation.
Fig. 23 is an elevational view illustrating the static and straight pillar or attachment making up another object of the invention and comprising the machined base and the calcinable chimney before and after having carried out the overcasting of the chimney on the base, and the screw being used for fitting the attachment to the implant in question.
Fig. 24 is an elevational view illustrating the one-piece pillar or attachment of Fig. 23 with a metallic and aesthetic structure being constructed on it, said pillar or attachment being fitted to the implant having been correctly positioned in the bone of the patient.
Fig. 25 illustrates in an elevational view an implant with the straight pillar or attachment being provided with the corresponding structure, said implant having been incorrectly positioned in the bone, this view showing the structure having been modified in order to thus make up for the incorrectness of the positioning of the implant in the bone.

### DETAILED DESCRIPTION OF A PREFERRED EMBODIMENT

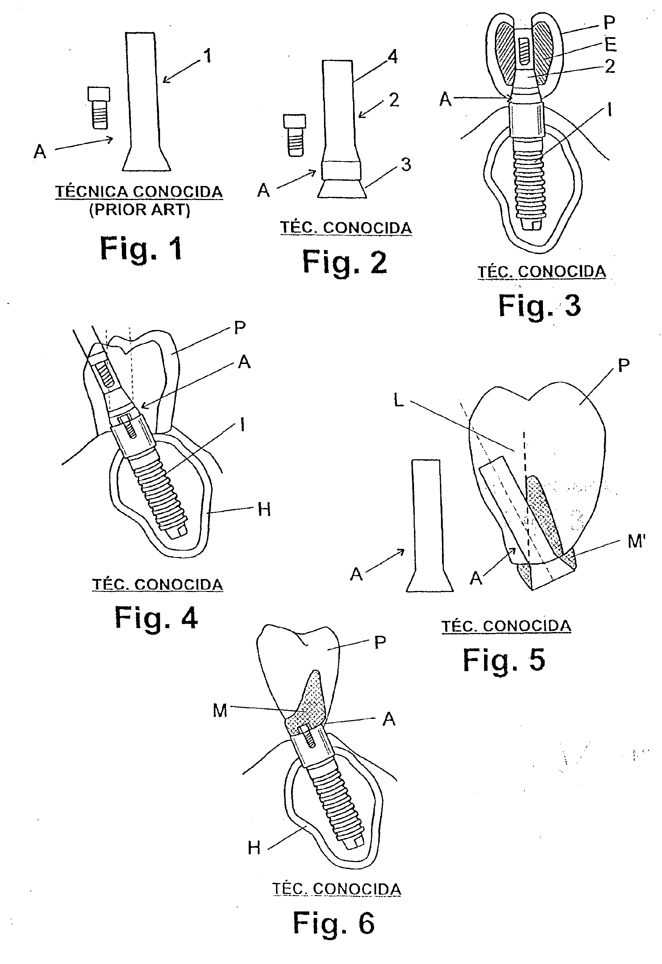

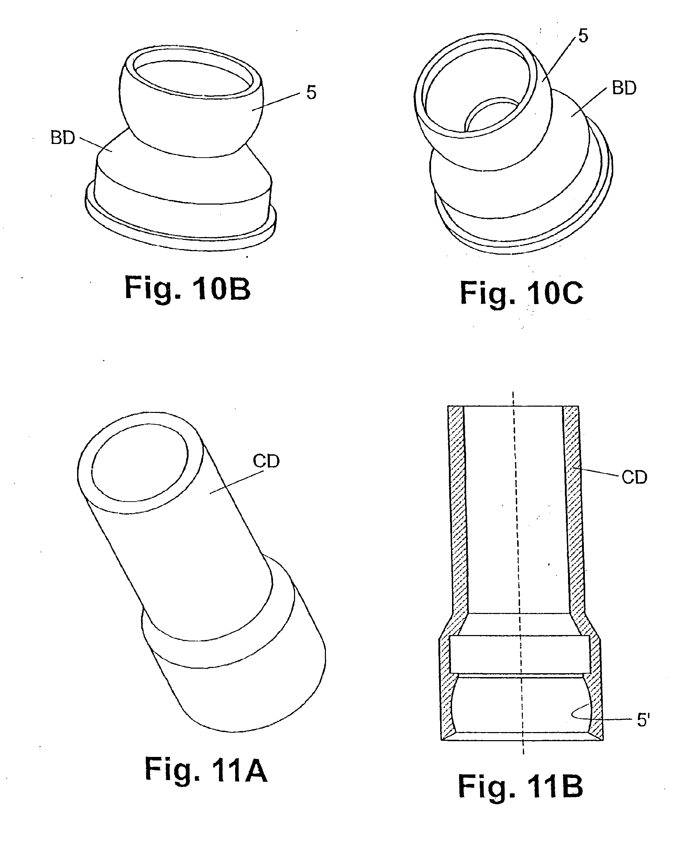

According to the drawings and referring to Figs. 1 through 15 the dynamic pillar being the object of the present invention for forming attachments for constructing structures on the implants represents a notable advance over the known means and techniques.

Thus there only exist so far in the market static attachments for constructing structures on the implants -I-, these attachments -A- possibly being:
- made of plastics material, fully calcinable and each made as a one-piece member, said attachments being straight as shown in Fig. 1, or else
- combination attachments -2- wherein the base -3-is a machined base being made of gold and fitted with a calcinable chimney -4-, these latter attachments also being straight, by means of disengaging the chimney -4- from the machined base -3- the combination attachments - 2- allowing to incline said chimney by about 10°.

These attachments -A- are needed in order to make the metallic structure -E- which will be later on coated with aesthetic material -P-.

The attachments being made of plastics material (Fig. 1) can be cast with any metal both of the noble and of the not-noble type. The combination attachments (Fig. 2) can only be cast with noble metal since they have the machined base -3- being made of said metal.

When the implants -I- are placed in the first surgery it so happens many times that they are not placed in their correct position; see Fig. 4. This can happen because of many reasons, such as that the dental surgeon has not placed the implant correctly, or that once having opened the gum sometimes the implant cannot be placed where planned because the bone does not satisfy a number of requirements, the implant -I- then being placed in an inclined position (see Figs. 4, 5 and 6).

With the present prior art when the practitioner has to cope with a misplaced implant -I- and it is desired to rectify the angulation there are two options: one of them consists in screwing down a prefabricated titanium abutment -M- having a given angulation of 15°, 17°, 25° or 30° (see Fig. 6) whereupon the cemented prosthesis -P- is placed on those abutments -M-, the other option consisting in placing an attachment -A- of the aforementioned type and modifying it (see Fig. 5) for such a purpose then proceeding to wax and cut the plastics material in order to thus shape that abutment -M'- with the needed angulation, the prosthesis -P- being thereupon cemented on it (Fig. 5).

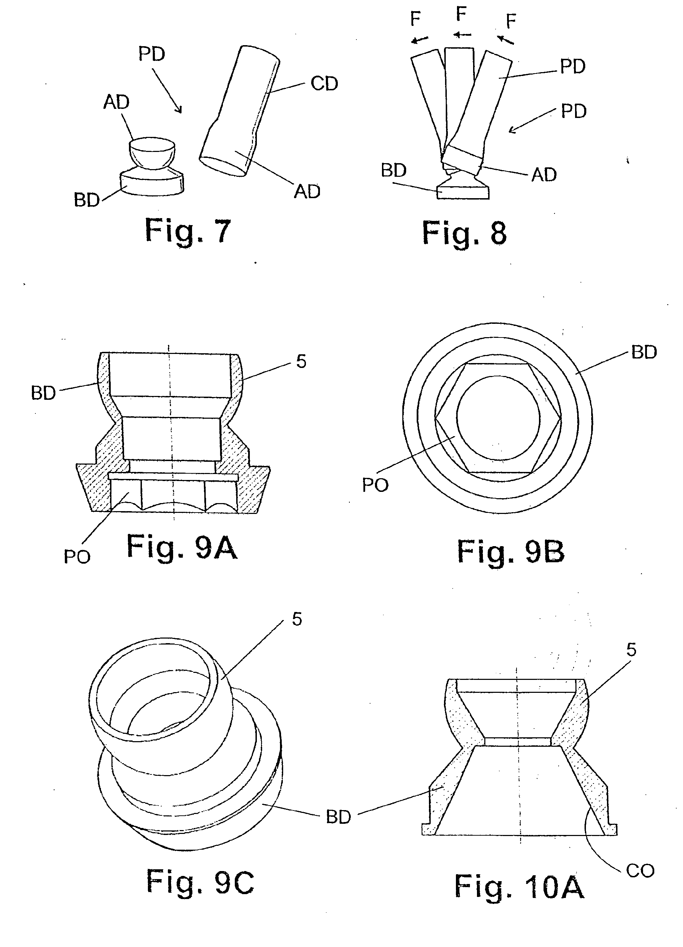

Figs. 1 through 6 having been described above correspond to the prior art, whereas Figs. 7 through 15 correspond to the present invention.

The dynamic pillar -PD- of the invention (see Figs. 7 and 8 and the remaining ones) introduces a new concept. As stated by its very name, this dynamic pillar is endowed with motion and does away with the static notion of the pieces having been conceived so far. It has a total freedom of motion between 0° and 25° all around the circumference and hence becomes an indispensable tool for resolving any type of angulation, i.e. from the smallest one up to 25°.

The dynamic pillar -PD- of the present invention comprises two pieces namely being the base -BD- and the chimney -CD- being connected to each other in such a way that they form an elbow serving as an articulated link (see Fig. 8), and by pivoting the chimney -CD- on the half-sphere of the base -BD- said chimney can be placed at a maximum angulation of 25°. When the chimney -CD- is at the maximum angulation one of the edges is in abutment with the base -BD- and does not allow the angulation to be taken any further.

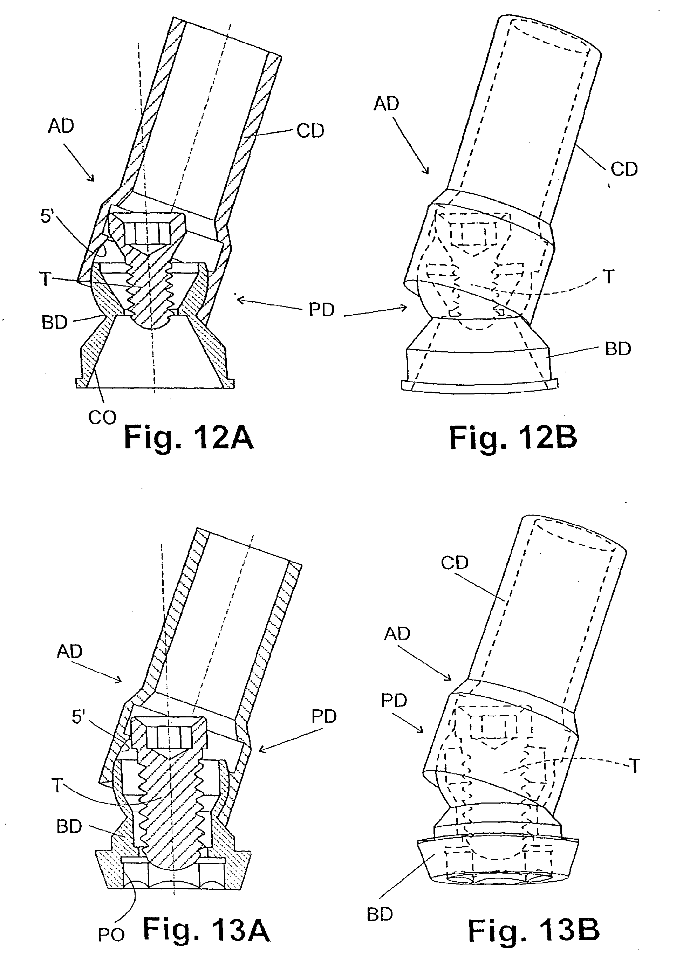

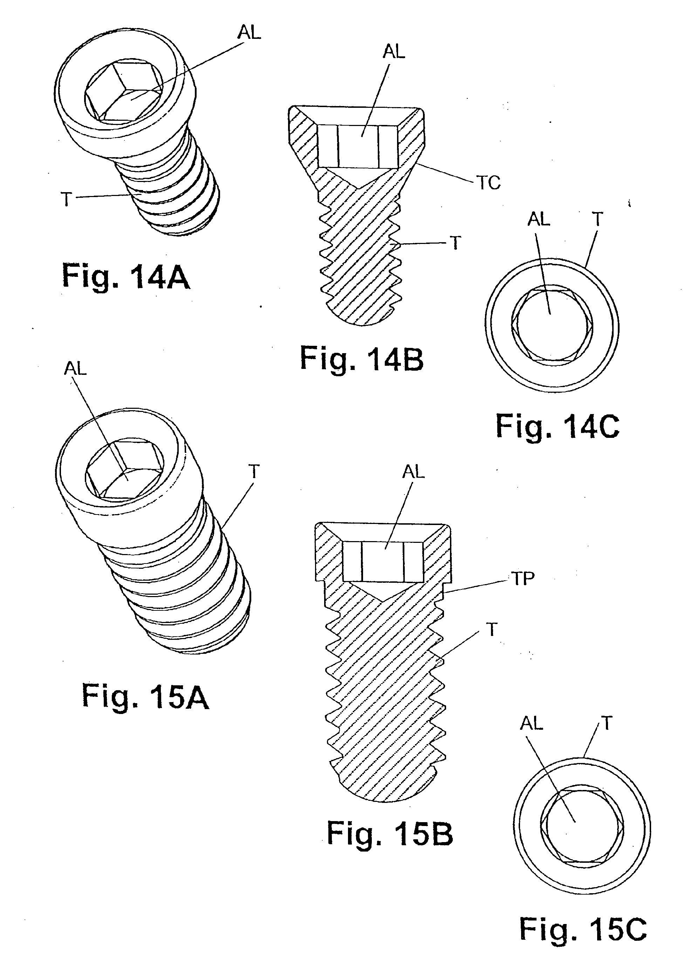

As has been said, the dynamic pillar -PD- of the invention comprises two separate pieces making up the base -BD- and the chimney -CD- being connected to each other by means of an articulated link -AD-, of said two pieces the base -BD- having a half-sphere-shaped configuration -5- and the chimney -CD- having at the end to be fitted to the base a matching configuration -5'-, said articulated link -AD- allowing the chimney -CD- to form an angle of up to some 25° with the base -BD-; see arrows -F- in Fig. 8. By means of a screw -T- being illustrated in Figs. 14A through 15C the base is fitted to the longitudinal bore of the implant -I- being introduced in the bone -H- of the mandibula, said pieces namely being the base -BD- and the chimney -CD- once cast forming a one-piece member with the desired angulation, in such a way that in the aforementioned Figs. 12A and 13A the base -BD- and the chimney -CD- would at this stage have one and the same section lining, this allowing the prosthesis -P- being cemented on said piece to find itself in a correct position thus making up for any angularly incorrect placement of the implant -I- in the bone -H-.

The combination of said pieces namely being the base -BD- and the chimney -CD- being articulatedly linked to each other and making up the dynamic pillar -PD- provides a freedom of motion (arrows -F-) between 0° and 25° allowing to relatively position them with respect to each other with the desired angulation before proceeding to carry out the casting operation.

The dynamic pillar -PD- of the invention allows to freely choose the metal to be cast, in such a way that the two calcinable pieces -BD- and -CD- are cast with any metal, the machined base -BD- in noble metal and the chimney -CD- of plastics material are cast with noble metal, and when the machined base -BD- is of TiLite with titanium this latter metal will be the one to be used for carrying out the casting operation, said TiLite with titanium being the only overcastable not-noble metal.

The dynamic pillar -PD- of the invention is applicable to any outer end of any implant -I- existing in the market.

According to the invention the base -BD- consists in a TiLite with titanium alloy to which the chimney -CD- is overcast with the same TiLite with titanium alloy with the desired angulation, said base having in each case a matching configuration at its side to be fitted to the end of the implant -I-, said matching configuration allowing to properly fit said base to any implant -I-existing in the market.

Each of Figs. 12A and 13A shows an embodiment of the base -BD- as per a fitting side having a tapered configuration -CO- and a polygonal configuration -PO-, respectively, in order to thus have it fitted to the end of the implant -I-. The screw -T- is arranged in a like manner with the configurations -TC- and -TP- in Figs. 14B and 15B, respectively.

The dynamic pillar -PD- provides as novelties:
A freedom of motion between 0° and 25°.
Free selection of the metal to be cast.
   Both pieces of a calcinable sort.
   Machined base in noble metal and chimney of plastics material.
   Machined base of TiLite with titanium (the only not-noble metal that can be overcast).

Said dynamic pillar can besides be cast with any metal.

This dynamic pillar is as well endowed with the following features:
- It allows to swiftly solve the problems being encountered.
- Millimetric accuracy in the desired angulation.
- Cost and time reduction.
- The articulated link system can be applied to any outer end of any implant of those being available in the market. The clinician is free to place a given implant.
- Improved aesthetics of the prostheses to be carried out, since the bore of the chimney can be moved with full freedom.

The invention also has as its object a tool -HE'- for fitting/removing the dynamic pillar -PD- to/from the implant -I- being introduced in the bone -H-.

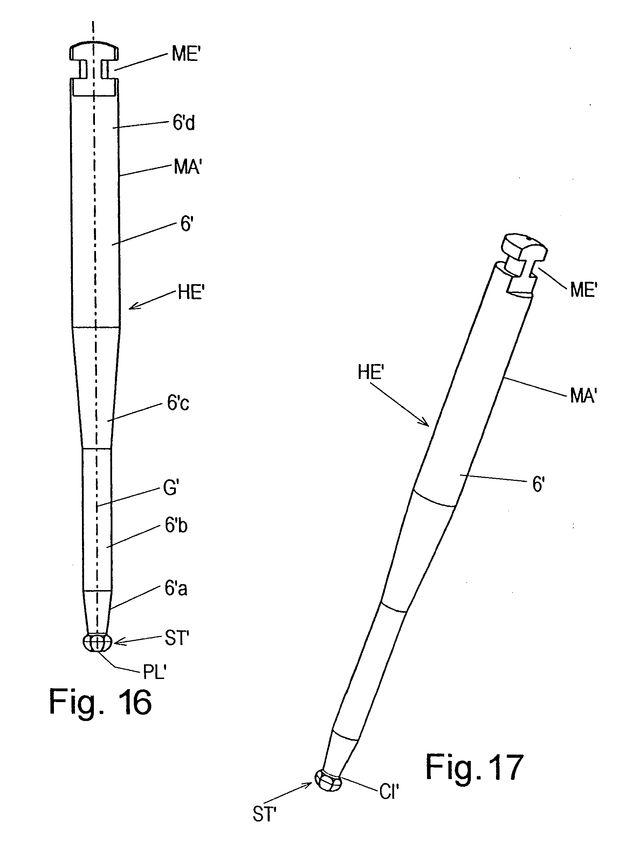

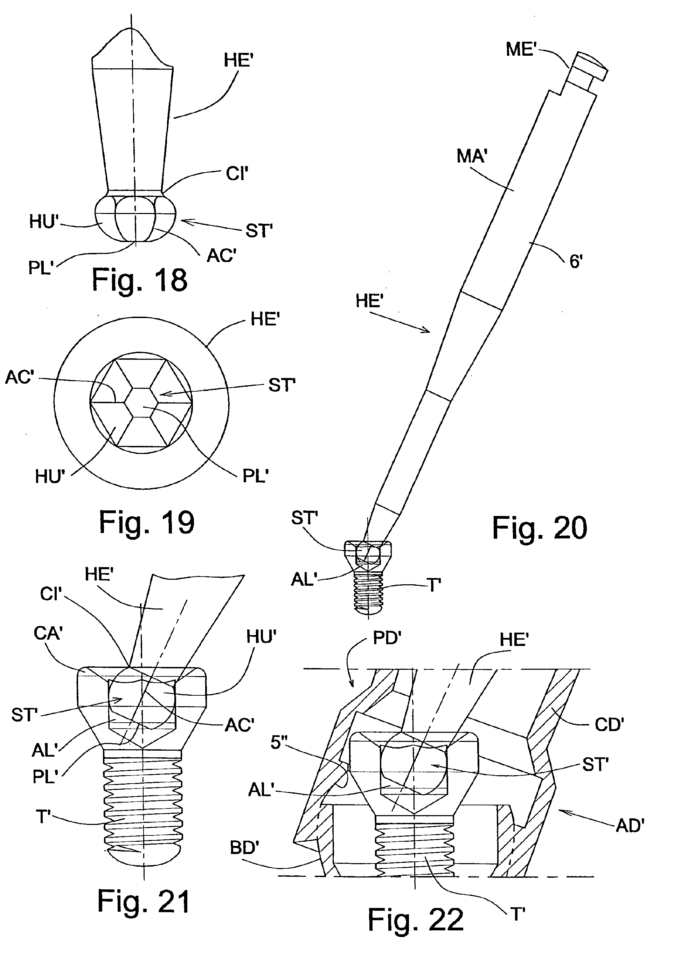

Figs. 16 through 22 illustrate the fitting tool -HE'- being another object of the present invention and comprising a protrusion -ST'- being provided at the actuator end and having an essentially spherical configuration (see Figs.) being defined by a succession of surfaces having the shape of spherical lunes -HU'- and being truncated at both ends and delimited between each other by respective curved edges -AC'-, said spherical protrusion -ST'- being formed by a succession of spherical lunes -HU'- being adapted to correctly fit into the recess -AL'- being innerly and laterally provided with the shape of a nut in the head -CA'- of the screw -T'-, this allowing the tool -HE'- to perfectly actuate at any angle being formed by the chimney -CD'- and the base -BD'- of the dynamic pillar -PD'-.

At the actuator end the aforementioned truncation defines an end plane -PL'- being flat and orthogonal to the axis -G'- of the elongated body -6'- of the tool.

At the opposite end the truncation defines a circumference -CI'- being the starting point for said elongated body -6'- making up a conventional actuator handle -MA'- being made up by a cylindrical body -6'- comprising several lengths -6'a-, -6'b-, -6'c-, -6'd- of different diameter for the manual actuation and having at the free end of the last length -6'd- conventional fitting means -ME'- for the actuation of the tool -HE'- with power driving means -not shown-.

The end plane -PL'- of the actuator protrusion -ST'- having an essentially spherical configuration is preferentially orthogonal to the aforementioned axis -G'- of the cylindrical, elongated body -6'-, although said plane can form an angle with said axis, and the end of the protrusion -ST'- can even be flat, spherical or of any other configuration.

The tool -HE'- of the invention can be made of any convenient material preferentially being a metallic one, said tool being preferentially made of a hardened stainless steel and titanium alloy.

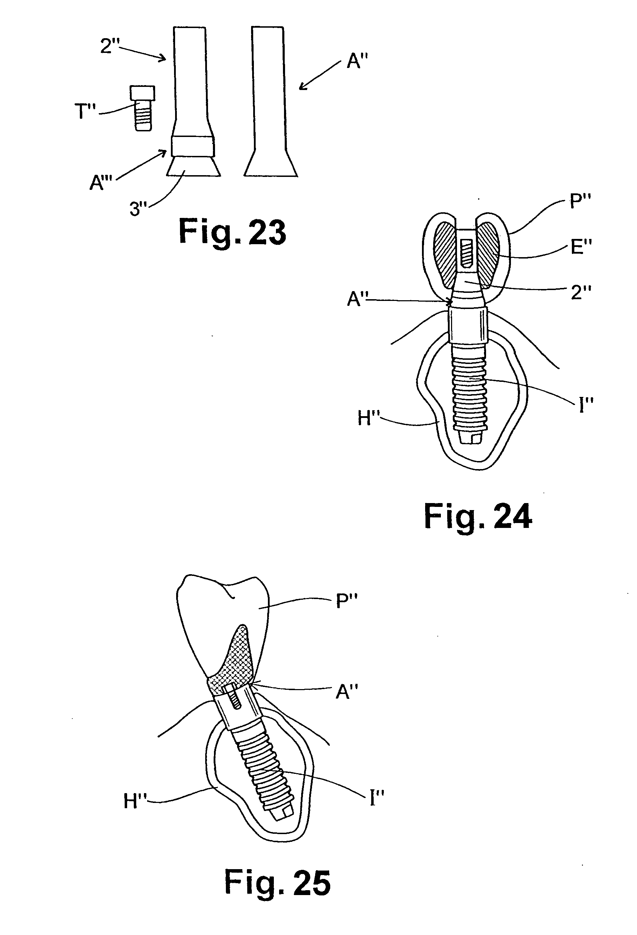

Figs. 23, 24 and 25 as well illustrate the straight pillar or attachment -A"- making up a yet additional object of the invention, said straight pillar -A"- allowing the construction of structures comprising the metallic structure -E"- being coated with the aesthetic material -P"-, said structures being fitted to the implant -I" - in question, this latter being placed in the bone -H" - of the upper or lower mandibula of the patient.

The pillar or attachment -A"- of the present invention comprises as illustrated at -A"'- two separate pieces namely being the base -3"- and the calcinable chimney -2"-. The base -3" - is machined and made of TiLite with titanium, and the chimney -2"- being made of calcinable plastics material is overcast with TiLite with titanium on the machined base being made of TiLite with titanium.

As stated above, the TiLite with titanium alloy is the only not-noble metal being overcastable on itself exactly the same as the noble metals such as gold and others.

As shown in Fig. 23, before overcasting the chimney -2"- being made of calcinable plastics material with TiLite with titanium on the machined base -3"- being as well made of TiLite with titanium the straight pillar or attachment -A"- although being straight allows to if desired make a small angulation between both pieces. After having overcast the chimney -2"- on the machined base -3"- the one-piece pillar or attachment -A"- is obtained and can be fitted to the implant -I"- by means of a screw -T"- being illustrated in Fig. 23.

The base -3"- of the straight pillar or attachment of the invention does of course have a configuration matching that of the outer end of the implant -I"- in order to thus allow to in a corresponding manner fittingly join said base -3"- and hence the attachment or pillar -A"- to any implant of the market.

## Claims

1. A dynamic pillar for dental implants which comprises two separate pieces making up the base to be fitted to the implant and the chimney to be fitted to the base, the prosthesis being thereupon fitted onto said chimney, said two pieces being connected to each other by means of an articulated link, said dynamic pillar being **characterised in that** said articulated link (AD) is made up by a half-sphere-shaped configuration (5) being provided at the free end of the base (BD) and a matching configuration (5') being provided at the fitting end of the chimney (CD) having a cylindrical configuration, said articulated link (AD) allowing the chimney (CD) to form an angle from 0° up to some 25° with respect to the base (BD), said base having a polygonal and/or tapered configuration at the end to be fitted to the end of the implant (I), said base being fitted by means of a screw (T) to the implant, i.e. to the longitudinal bore of the implant (I) being introduced in the bone (H), said pieces namely being the base (BD) and the chimney (CD) once cast forming a one-piece member with the desired angulation in order to thus have the prosthesis (P) arranged in a correct position even if the implant (I) has been misplaced.

2. A dynamic pillar as per claim 1, **characterised in that** the metal and the alloys to be employed for carrying out the casting/overcasting operation and for forming the one-piece member making up the base-and-chimney assembly can be chosen from among the following ones:
- any metal for the case wherein both pieces namely being the base and the chimney (BD, CD) are made of a calcinable material,
- a noble metal for the machined base (BD) and a chimney (CD) being made of plastics material,
- a noble metal for the two pieces, the machined base (BD) being made of TiLite with titanium, and
- the chimney (CD) is overcast with TiLite with titanium on the base (BD) being made of the same TiLite with titanium alloy.

3. A tool being designed for by means of the corresponding screw fitting/removing the dynamic pillar of claims 1 and 2 to/from the implant (I) being introduced in the bone (H), said tool being made up by an elongated body having at the free end fitting means allowing an actuation being carried out by power driving means and at the opposite actuator end having a protrusion having a polygonal contour being made up by a succession of faces as a by way of nut head being fit to act as an actuator tip being adapted to actuate said screw being provided at its head with a recess having a configuration matching that of the nut head being made up by the aforementioned protrusion of the elongated body, said tool in order to be made to operate being introduced through the chimney of the one-piece member being made up by the dynamic pillar, said tool being **characterised in that** the protrusion being provided at the tool (HE') as a by way of nut head being fit to act as an actuator tip being adapted to actuate the screw being used for fitting the dynamic pillar to the implant has an essentially spherical configuration being defined by a succession of faces being made up by surfaces having the shape of spherical lunes (HU') and being truncated at both ends, said faces being delimited between each other by respective curved edges (AC'), said spherical protrusion (ST') being formed by a succession of spherical lunes (HU') being adapted to properly fit into the recess (AL') of the screw (T') and thus allowing the tool (HE') to perfectly carry out its actuating action at any angle being formed by the chimney (CD') and the base (BD') of the dynamic pillar (PD'), in said protrusion the aforementioned truncations at the actuator end defining and end plane (PL') and at the opposite starting end defining a circumference (CI') being the starting point for said elongated body (6') making up a conventional actuator handle (MA') being made up by a cylindrical body (6') comprising several lengths (6'a, 6'b, 6'c, 6'd) of different diameter.

4. A tool as per claim 3, **characterised in that** the end plane (PL') of the actuator protrusion (ST') having an essentially spherical configuration is orthogonal to the aforementioned axis (G') of the elongated body (6').
